# EUROPÄISCHE PATENTANMELDUNG

(11) **EP 0 522 610 A1**
(43) Veröffentlichungstag der Anmeldung: **13.01.1993**
(21) Anmeldenummer: 92201550.8
(22) Anmeldetag: 01.06.1992
(51) Int. Cl.: G01B 7/00, G01B 7/28

(54) **Verfahren zur Bestimmung der Flächenkontur von Laufradschaufeln hydraulischer Maschinen, sowie Vorrichtung zur Ausführung des Verfahrens**

(30) Priorität: 26.06.1991 CH 1883/91
(71) Anmelder: Sulzer - Escher Wyss AG, CH-8023 Zürich (CH)
(72) Erfinder: Schneebeli, Fritz, CH-8102 Oberengstringen (CH)
(74) Vertreter: Hammer, Bruno, Dr.

(57) **Zusammenfassung**

Zur Bestimmung der Oberflächenkontur an schwer zugänglichen Stellen, z.B. der Schaufelform einer hydraulischen Maschine, wie einer Wasserturbine, gleichzeitig auf allen Seiten der Schaufel, und in eingebautem Zustand, ist ein Gestänge aus mindestens drei oder mehr durch Universalgelenke (7, 8, 9, 10, 11) in allen Richtungen schwenkbar miteinander verbundenen Armen (2, 3, 4, 5, 6) fester Länge vorgesehen. Mit Winkelpositionsmessfühlern (13, 14) in den Gelenken (7, 8, 9, 10, 11) wird die Winkelposition der benachbarten Arme um zwei zueinander senkrechte Drehachsen (A, B) bestimmt und in einer Auswerteeinheit (18) zur Bestimmung der Koordinaten der Abtastspitze (20) mit verbesserter Messgenauigkeit ausgewertet.

## Beschreibung

Die Erfindung betrifft ein Verfahren zur Bestimmung der Flächenkontur von Laufradschaufeln hydraulischer Maschinen durch mechanisches Abtasten einzelner Punkte der Fläche mit einem Abtastgestell, sowie eine Vorrichtung zur Ausführung des Verfahrens.

Bei hydraulischen Maschinen, insbesondere bei Wasserturbinen oder Pumpenturbinen, ist es erforderlich, nach einer bestimmten Betriebszeit die Form der Schaufelprofile nachzumessen und Veränderungen der Profile festzustellen, und danach die Schaufeln nachzuarbeiten, um das optimale Profil wiederherzustellen.

Bekannte mechanische Flächenkontur-Abtastvorrichtungen, z.B. die aus DE-A-32 41 074 und DE-A-35 06 494 bekannten Kreuzschieber sind zur Bestimmung von Schaufelprofilen jedoch nur schlecht geeignet. Diese weisen drei zueinander senkrechte verschiebbare Arme mit verstellbarer Länge auf, bei denen die Länge der einzelnen Arme so lange verstellt wird, bis die Abtastspitze an des äussersten Armes auf der Fläche aufsitzt. Die Längen der drei Arme geben dabei unmittelbar die Koordinaten des abgetasteten Flächenpunktes an. Die Flächenkontur ergibt sich dabei durch sukzessives Abtasten einzelner Flächenpunkte gemäss einem vorbestimmten Raster. Die Koordinaten-Bestimmung beruht hierbei auf einer Längenmessung und ist von der Temperatur und Belastung abhängig und entsprechend ungenau. Damit lassen sich zudem stark gekrümmte und gewundene Flächen nicht in einer einzigen Aufspannung abtasten, insbesondere nicht gleichzeitig auf der Vorderseite und der Rückseite z.B. eines Schaufelprofiles.

Aus GB-A-1 498 009, EP-A-155 084 oder FR-A-2 634 279 sind andererseits Messgeräte mit mehreren durch Schwenkgelenke verbundenen Armen bekannt. Aus den Drehwinkeln und den Schwenkwinkeln lässt sich die Position der Spitze des äusseren Armes mit guter Präzision ermitteln. Nachteilig ist jedoch auch hierbei, dass mit einem solchen Abtastgestänge wegen der immer noch unzureichenden Flexibilität nur relativ einfach geformte Flächen abgetastet werden können. Bei stark gewundenen und gekrümmten Flächen, beispielsweise bei kompliziert gekrümmten Schaufelformen, z.B. von Wasserturbinen, insbesondere Francis-Turbinen, lässt sich deren Flächenkontur mit solchen bekannten Vorrichtungen jedoch nicht auf einfache Weise in einem einzigen Messvorgang bestimmen. Insbesondere ist es nicht möglich, in einer Aufspannung die Vorderseite und die Rückseite eines bestimmten Profils, beispielsweise einer Wasserturbinenschaufel, abzutasten. Zudem ist die Messung nicht in eingebautem Zustand der Maschine möglich. Die Turbine muss dazu ausgebaut und aufgespannt werden, was weitere Ungenauigkeiten und Messfehler zur Folge hat.

Die Erfindung setzt sich die Aufgabe, die angeführten Nachteile des Standes der Technik zu beseitigen und ein Verfahren und eine Vorrichtung zur Bestimmung von Flächenkonturen der Schaufeln hydraulischer Maschinen mit verbesserter Präzision zu schaffen, welche eine vergrösserte Flexibilität aufweist, so dass sie auch für kompliziert gekrümmte und gewundene Flächen geeignet ist und gleichzeitig die Bestimmung der Kontur der Vorderseite und der Rückseite eines Profiles erlaubt, und zwar im eingebauten Zustand und ohne die Notwendigkeit, die Maschine auszubauen.

Nach dem erfindungsgemässen Verfahren wird diese Aufgabe dadurch gelöst, dass die Flächenkontur mit einem Gestell aus mindestens drei, durch antriebsfreie Universal-Gelenke mit einer Schwenkbarkeit bzw. Drehbarkeit von jeweils zwei zueinander senkrechten Achsen verbundenen Armen fester Länge, wobei der innerste Arm an einer ortsfesten Basis ebenfalls um zwei zueinander senkrechten Achsen schwenkbar bzw. drehbar befestigt ist, dadurch abgetastet wird, dass eine am Ende des äussersten Armes vorgesehene Abtastspitze auf der Fläche aufgesetzt wird, und dass die Winkelpositionen der Universal-Gelenke in jeweils beiden Richtungen gemessen werden, und aus den gemessenen Winkelpositionen und den vorgegebenen Längen der Arme die Raumposition der Abtastspitze berechnet wird.

Eine Vorrichtung zur Ausführung dieses Verfahrens weist ein Gestell aus mindestens drei, durch antriebsfreie Universal-Gelenke mit einer Schwenkbarkeit um jeweils zwei zueinander senkrechte Schwenk- bzw. Drehachsen verbundenen Armen fester Länge auf, wobei die Gelenke jeweils zwei Winkelmessfühler zur Messung der Winkelposition der aufeinander folgenden Arme in den beiden Richtungen aufweisen und der innerste Arm an der ortsfesten Basis ebenfalls in zwei zueinander senkrechten Richtungen schwenkbar bzw. drehbar befestigt ist, und wobei am Ende des äussersten Armes eine Abtastspitze vorgesehen ist, sowie eine Auswerteeinrichtung, welche aus den gemessenen Winkelpositionen und den vorgegebenen Längen der Arme die Raumposition der Abtastspitze berechnet.

Da das Abtastgestänge aus mindestens drei oder mehr aufeinanderfolgenden, mit Universal-Gelenken verbundenen Armen besteht, wird mit den sechs oder mehr zur Verfügung stehenden Winkel-Parametern die Abtastung komplizierter Flächen mit hinreichender Flexibilität möglich, und zwar ohne Längenverstellbarkeit der einzelnen Arme, so dass auch verdeckte Messpunkte auf der Rückseite ohne Mühe und ohne Ausbau oder Umspannen der Maschine erreicht werden können. In vielen Fällen genügen dazu drei Arme, in komplizierten Fällen können jedoch auch vier, fünf oder mehr Arme vorgesehen sein, die eine schlangenhafte Beweglichkeit ermöglichen.

Bei einer vorteilhaften Weiterbildung ist die Abtastspitze der äussersten Stange so ausgebildet, dass sie in Richtung der Flächennormale auf der abzutastenden Fläche aufsitzt. Die Richtung dieser Flächennormalen lässt sich hierbei ebenfalls aus den Winkelpositionen der Gelenke ermitteln und kann somit in die Berechnung einbezogen werden.

Die Erfindung wird anhand der in den Figuren dargestellten Ausführungsbeispiele von Vorrichtungen zur Ausführung des erfindungsgemässen Verfahrens näher erläutert. Es zeigen:
- Fig. 1: eine Vorrichtung zur Bestimmung einer Flächenkontur in Seitenansicht, und
- Fig. 2: ein Gelenk zwischen zwei Abtastarmen im Schnitt.

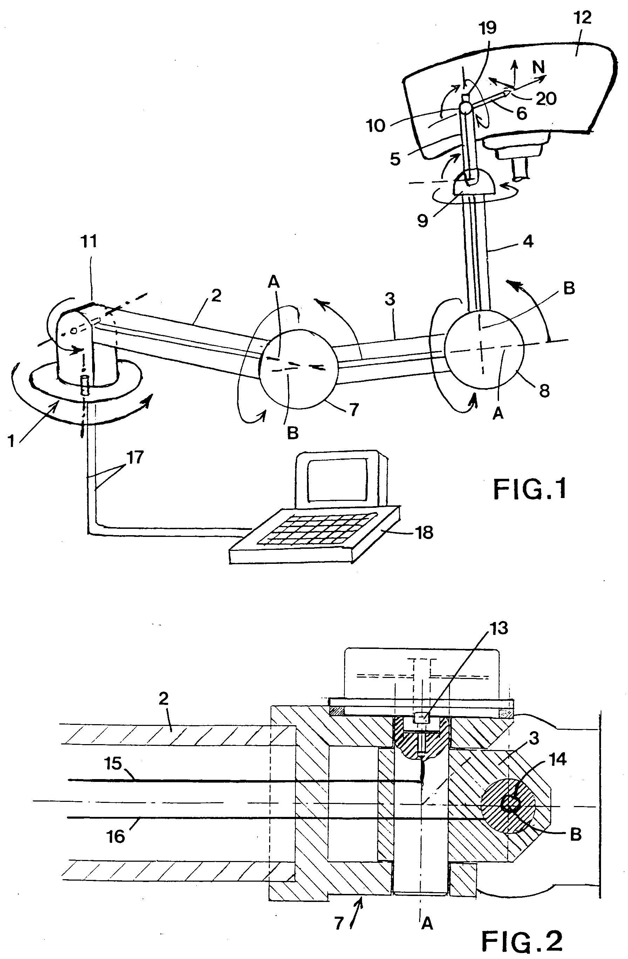

Die in Fig. 1 dargestellte Vorrichtung besteht aus einem an einem Fixpunkt 1, insbesondere dem Maschinenfundament, angebrachten Gestänge oder Gestell, welches aus mehreren Armen 2, 3, 4, 5 und 6 besteht, welche durch Universal-Gelenke 7, 8, 9, 10 miteinander derart verbunden sind, dass sich die Arme gegeneinander frei bewegen können, indem sie in den Gelenken um zwei zueinander senkrechte Drehachsen A, B schwenkbar oder drehbar sind. Dabei haben die einzelnen Arme 2, 3, 4.. eine unveränderliche vorgegebene Länge. Der innere Arm 2 ist an der Basis 1, z.B. dem Maschinenfundament oder dem Laufrad ebenfalls über ein in allen Richtungen bewegliches Gelenk 11 angebracht. Der äussere Arm 6 ist als Taster ausgeführt, dessen Abtastspitze 20 auf die abzutastende Fläche 12, deren Kontur zu bestimmen ist, an einzelnen Messpunkten nacheinander aufgesetzt wird.

Ein Beispiel eines Gelenkes zwischen zwei benachbarten Armen ist in Fig. 2 wiedergegeben. Es ist in der Form eines Kreuzgelenkes ausgeführt, welches eine Schwenkbarkeit der Arme 2 und 3 gegeneinander um Drehachsen A und B unabhängig voneinander gestattet. Die jeweilige Position der beiden Arme 2 und 3 gegeneinander in den beiden Schwenkrichtungen ist mit Winkelpositionsgebern 13 und 14 feststellbar. Diese können in konventioneller, dem Fachmann bekannter Art ausgeführt sein und über Leitungen 15 und 16 jeweils ein Winkelpositionssignal in dem Gestänge 2 zur Basis 1 weiterleiten. Die einzelnen Winkelpositionssignale der Gelenke 7, 8 ...11 werden vom Fixpunkt 1 über Leitungen 17 zu einer Auswerteeinheit 18 geleitet, welche aus den Winkelpositionssignalen der Gelenke 7, 8, ...11, sowie den vorgegebenen Längen der Abtaststangen 2, 3, ...6 die Position der Abtastspitze 20 berechnet. Der dazu erforderliche einfache geometrische Rechenalgorithmus ist dem Fachmann bekannt. Die einzelnen auf diese Weise bestimmten Koordinaten der abgetasteten Messpunkte auf der Fläche 12 werden in der Auswerteeinheit 18 gespeichert und zu einer Gesamtinformation über die Kontur der abgetasteten Fläche 12 zusammengefügt.

Insbesondere lässt sich aus diesen verarbeiteten Messwerten feststellen, ob die gemesse Kontur von einer vorgegebenen Sollkontur in Form eines 3D-Flächenmodells, beispielsweise der idealen Schaufelform einer Wasserturbine abweicht, und ob eine Nacharbeitung erforderlich ist. Wegen der schlangenartigen Beweglichkeit des Abtastgestänges sind hierbei auch versteckte Flächenteile und Innenflächen bequem zugänglich. Die Abtastvorrichtung lässt sich derart flexibel ausbilden, dass nahezu alle denkbaren Flächen erreicht und abgetastet werden können, ohne dass die Turbine aus dem Fundament ausgebaut und umgespannt werden muss.

Die beim Abtasten erzielbaren Informationen können noch dadurch erweitert werden, dass die Messspitze der äusseren Abtaststange 6 so ausgebildet wird, dass sie stets in Normalen-Richtung N auf der abzutastenden Fläche 12 aufsitzt.

Die Abtastung der Flächenkontur 12 erfolgt vorzugsweise manuell, wobei die Winkelpositionen bei jedem Antasten durch manuelle Auslösung der Positionssignale in der Auswerteeinheit 18 gespeichert werden, sobald die Abtastspitze 20 auf der Fläche aufsitzt. Eine solche manuelle Abtastung an einer Vielzahl beliebig wählbarer Messpunkte bietet den Vorteil, dass keinerlei Antriebs- und Steuerelemente erforderlich sind, so dass die Vorrichtung besonders leicht und einfach ausgeführt sein kann und Messfehler infolge Verformungen vermieden werden. Jedoch ist auch eine automatische Auslösung möglich, wobei die Abtastspitze 20 bzw. das Gelenk 10 zusätzlich einen Druck- oder Annäherungsschalter 19 aufweist, welcher die Speicherung der Winkelpositionswerte auslöst, sobald die Abtastspitze 20 auf der abzutastenden Fläche 12 aufsitzt.

Die Gelenke 7, 8, ...11 können statt als echte Kreuzgelenke auch in anderer Form ausgebildet sein, z.B. als Kugelgelenke mit Schwenkbarkeit in allen Richtungen, also auch bei zwei beliebigen, zueinander senkrechten Drehachsen, wobei die Winkelpositionsmesser die Winkelpositionswerte jeweils in zwei zueinander senkrechten Richtungen erfassen.

Da das Abtastgestänge keine störenden Gewichte, wie z.B. Motoren oder dergleichen aufweist und daher auch bei grösserer Länge praktisch keine das Messresultat störenden Deformationen aufweist, und da nur mit genau messbaren Winkelpositionen gearbeitet wird, sind die ermittelten Koordinatenwerte ausserordentlich präzis. Da beliebig viele Flächenpunkte frei wählbar auf beliebigen Teilen der Fläche, einschliesslich der Rückseite und Innenflächen abgetastet und deren Messwerte in nur einem einzigen Messvorgang verarbeitet werden können, ist die Flexibilität und Anwendbarkeit der Vorrichtung und deren Messgenauigkeit deutlich verbessert. Sie lässt sich auch dort mit Vorteil verwenden, wo andere Verfahren versagten oder mit grossen Schwierigkeiten verbunden waren, z.B. zur Bestimmung der Oberflächenkontur einer Turbinenschaufel gleichzeitig auf allen Seiten, und zwar in eingebautem Zustand der Maschine in einem Wasserkraftwerk.

## Patentansprüche

1. Verfahren zur Bestimmung der Flächenkontur von Laufradschaufeln (12) hydraulischer Maschinen durch mechanisches Abtasten einzelner Punkte der Fläche mit einem Abtastgestell, dadurch gekennzeichnet, dass die Flächenkontur mit einem Gestell aus mindestens drei, durch antriebsfreie Universal-Gelenke (7, 8, 9, 10) mit einer Schwenkbarkeit bzw. Drehbarkeit von jeweils zwei zueinander senkrechten Achsen (A, B) verbundenen Armen (2, 3, 4, 5, 6) fester Länge, wobei der innerste Arm (2) an einer ortsfesten Basis (1) ebenfalls um zwei zueinander senkrechten Achsen schwenkbar bzw. drehbar befestigt ist, dadurch abgetastet wird, dass eine am Ende des äussersten Armes (6) vorgesehene Abtastspitze (20) auf der Fläche aufgesetzt wird, und dass die Winkelpositionen der Universal-Gelenke (7, 8, 9, 10) in jeweils beiden Richtungen gemessen werden, und aus den gemessenen Winkelpositionen und den vorgegebenen Längen der Arme (2, 3, 4, 5, 6) die Raumposition der Abtastspitze (20) berechnet wird.

2. Verfahren nach Anspruch 1, dadurch gekennzeichnet, dass die Abtastspitze (20) in Richtung der Flächennormalen (N) auf die Laufradschaufel (12) aufgesetzt wird, und die Normalenrichtung aus den Winkelpositionen und den Längen der Arme (2, 3, 4, 5, 6) berechnet wird.

3. Vorrichtung zur Ausführung des Verfahrens zur Bestimmung der Flächenkontur von Laufradschaufeln (12) hydraulischer Maschinen nach Anspruch 1 oder 2, gekennzeichnet durch ein Gestell aus mindestens drei, durch antriebsfreie Universal-Gelenke (7, 8, 9, 10) mit einer Schwenkbarkeit um jeweils zwei zueinander senkrechte Schwenk- bzw. Drehachsen (A, B) verbundenen Armen (2, 3, 4, 5, 6) fester Länge, wobei die Gelenke (7, 8, 9, 10) jeweils zwei Winkelmessfühler (13, 14) zur Messung der Winkelposition der aufeinander folgenden Arme in den beiden Richtungen aufweisen, und der innerste Arm (2) an der ortsfesten Basis (1) ebenfalls mit einem Gelenk (11) in zwei zueinander senkrechten Richtungen schwenkbar bzw. drehbar befestigt ist, und wobei am Ende des äussersten Armes (6) eine Abtastspitze (20) vorgesehen ist, sowie durch eine Auswerteeinrichtung (18), welche aus den gemessenen Winkelpositionen und den vorgegebenen Längen der Arme (2, 3, 4, 5, 6) die Raumposition der Abtastspitze (20) berechnet.

4. Vorrichtung nach Anspruch 3, dadurch gekennzeichnet, dass ein Schalter (19) zur Speicherung der Winkelpositionen der einzelnen Gelenke (7, 8,...11) beim Aufsitzen der Abtastspitze (20) auf der abgetasteten Fläche (12) durch die Auswerteeinheit (18) vorgesehen ist.

5. Vorrichtung nach Anspruch 4, dadurch gekennzeichnet, dass der Schalter (19) ein manuell auslösbarer Schalter ist.

6. Vorrichtung nach Anspruch 4, dadurch gekennzeichnet, dass der Schalter (19) ein Annäherungs- oder Druckschalter ist.

7. Vorrichtung nach einem der Ansprüche 3 - 6, dadurch gekennzeichnet, dass die Abtastspitze (20) derart ausgebildet ist, dass sie beim Aufsitzen auf der abgetasteten Fläche (12) die Normalen-Richtung (N) der Fläche (12) einnimmt.

8. Vorrichtung nach einem der Ansprüche 1 - 7, dadurch gekennzeichnet, dass die Basis (1) am Fundament oder Laufrad der Maschine vorgesehen ist.
